# EUROPEAN PATENT SPECIFICATION

(11) **EP 2 914 430 B1**
(45) Date of publication and mention of the grant of the patent: **28.06.2017**
(21) Application number: 13723632.9
(22) Date of filing: 06.05.2013
(51) Int. Cl.: B32B 27/00, B32B 27/32, B32B 33/00, B32B 27/08, B32B 27/16

(54) **COATED METALLIZED ORIENTED POLYPROPYLENE FILMS**
BESCHICHTETE METALLISIERTE AUSGERICHTETE POLYPROPYLENFOLIEN
FILMS DE POLYPROPYLÈNE ORIENTÉS MÉTALLISÉS REVÊTUS

(30) Priority: 01.11.2012 US 201261721207 P
(43) Date of publication of application: 09.09.2015
(73) Proprietor: Jindal Films Europe Virton SPRL, 6761 Virton (BE)
(72) Inventor: DABADIE, Thierry, J. L., L-1514 Luxembourg (LU); GUILLAUME, Christophe, E., B-5020 Namur (BE); GRINGOIRE, Bruno, R., B-6792 Rachecourt (BE)
(74) Representative: Johnson, Yvonne Catherine
(86) International application number: PCT/US2013/039668
(87) International publication number: WO 2014/070241

(56) References cited:
- WO-A1-01/53077
- WO-A1-97/38853
- WO-A1-02/081206
- WO-A1-2004/060672
- WO-A1-2012/028202
- US-A- 6 013 353
- US-A1- 2002 182 435

## Description

### CROSS-REFERENCE TO RELATED APPLICATIONS

### FIELD OF THE INVENTION

The present invention relates in general to coated metallized films that allow for printing on the metalized face of the film, and more particularly, to flexible metallized oriented polypropylene films having a coating on the metalized face that allows for printing and improves the scratch resistance of the metallized face, the films especially suitable for closed food packaging, i.e., bags.

### BACKGROUND

It is known that oriented polypropylene films have improved water and oxygen barrier properties over non-oriented films, and adding a coating of metal such as aluminum further improves such barrier properties. This makes such films very suitable for food packaging, such as in bags and packages made from flat metalized polypropylene films that have been folded and heat-sealed to make a closed bag to seal the food inside. Typically, to allow for printing on the outside of the bag, the metal side of the film is on the inside, thus necessitating a layer of sealable polymer over the metal layer to allow for a seal to be made. Such is disclosed, for example, in US 6,013,353.

There is however a desire to have the metal side of the polypropylene film to face the outside of the package for the user to see. The benefit of this is to (1) improve the ability of the film to form strong seals, and (2) the pleasing appearance of the shiny metal surface. However, an inherent problem in metal surfaces is the ability to print on the surface. Also, the now-exposed metal will be more susceptible to corrosion and scratching. The inventors have solved these and other problems by providing a flexible metalized oriented polypropylene film possessing a printable metal surface.

Disclosures related to film coatings, adhesives, and packaging include US2002/0182435, US 5,037,707, US 5,112,882, US 5,191,014, US 5,226,956, US 5,316,696, US 5,419,960, US 5,789,123, US 5,736,253, US 5,827,627, US 5,891,552, US 7,309,528, US 7,981,954, US 2007-0248810, US 2011-0097528, US 2011-0159306, U.S.S.N. 61/590,417, EP 409 403, WO 1998-032805, and DSM NeoResins product data sheet NeoCryl BT-67 (July 18, 2005).

### SUMMARY

Disclosed herein is a coated flexible oriented polypropylene film having three or more layers comprising a core layer of polypropylene; a sealing layer; a metal layer opposite the sealing layer, thereby sandwiching the core; and a printable coating adhered to the metal layer, thereby sandwiching the metal layer between the core layer and printable coating; wherein the printable coating comprises at least one primer layer of an ethylene acrylic acid-based copolymer or ethylene alkyl ester-based copolymer (or blend thereof) and at least one print layer comprising an acrylic styrene copolymer.

### DETAILED DESCRIPTION

The present invention is directed to metalized oriented polypropylene films having a very thin (less than 3 or 5 µm average thickness) printable coating on the metal side of the film, and preferably a sealable coating on the opposite sealing side of the film. The inventive films are also flexible and strong. The coatings are preferably applied as water based solutions and/or suspensions that are coated by any conventional means then dried on the film to allow the metal face of the film to be printed upon, while the opposite sealing side may be sealed against itself or another film to form food packaging or bags. Preferably, no curing step (heating above 100°C, radiation exposure, UV exposure, etc.) is required. The printable coating comprises at least one primer layer of an ethylene acrylic acid-based copolymer and/or ethylene alkyl ester copolymer and at least one print layer comprising an acrylic styrene copolymer, the print layer being the outer-most layer of the film that will face outside the bag that is formed from the film and be printed upon. The primer layer is the layer of coating that actually contacts the metal surface and is sandwiched between the metal layer and the printable layer.

Unless stated otherwise, when referring to an element as "consisting essentially of" what is meant is that there are no other additives that change the basic properties of the element being referred to, and preferably, that element contains no more than 3 wt% or 2 wt% or 1 wt% of other additives. When the element is a "layer" of material that makes up a film, "consisting essentially of" means that there are no other layers of film that influence the printability and scratch resistance and coefficient of friction of the film.

The flexible metalized films that are useful for the inventive coated films can be of most any structure but preferably have at least a MCS structure, where "M" is a metal layer, "C" is the core polypropylene layer, and "S" is a sealable skin layer. The "C" and "S" layers are most preferably co-extruded polymeric materials, the core layer having a thickness within the range of from 10 or 15 µm to 25 or 30 or 40 µm. The metal layer "M" is preferably a very thin (1-10 µm) layer of metal that is applied by means well known in the film arts and preferably comprises aluminum, nickel, silver, gold, or a combination of these, most preferably aluminum. The flexible metalized film may have any number of other tie-layers "T" and skin layers "S", each of which may be the same composition or different, as is known in the art, and thus may have an overall structure such as MTCTS, MTCS, MCTS, MTCTSS, MSTCTS, MCTSS, etc. Once the printable coating is applied, the structure is one of P^{c}MCS, P^{c}MTCTS, etc., where "P^{c}" is the printable coating which includes at least one primer layer and one print layer. Once the sealable coating is applied, the structure is one of P^{c}MCS^{c}, P^{c}MTCTS^{c}, etc., where "S^{c}" is the sealable coating.

As used herein, the term "layer" refers to each of the one or more materials, the same or different, that are secured to one another in the form of a thin sheet or film by any appropriate means such as by an inherent tendency of the materials to adhere to one another, or by inducing the materials to adhere as by a heating, radiative, chemical, or some other appropriate process. The term "layer" is not limited to detectable, discrete materials contacting one another such that a distinct boundary exists between the materials. Preferably, however, the materials used to make one layer of a film will be different (i.e., the weight percent of components, the properties of each component, and/or the identity of the components may differ) from the materials used to make an adjacent, and adhering, layer. The term "layer" includes a finished product having a continuum of materials throughout its thickness. The "films" described herein comprise three or more layers, and may comprise 3, 4, 5, 6, or more layers in preferred embodiments.

The coating weights of the primer and print layers are advantageously low. The coating weight of the ethylene acrylic acid-based primer is within the range of from 0.05 g/m² or 0.10 g/m² to 0.35 g/m² or 0.40 g/m² or 0.50 g/m² or 0.80 g/m² or 1.00 g/m². The coating weight of the acrylic styrene copolymer is within the range of from 0.50 g/m² or 1.00 g/m² to 1.25 g/m² or 1.30 g/m² or 1.40 g/m² or 1.50 g/m² or 2.00 g/m².

The co-extruded polymeric layers are oriented, preferably in at least the MD, and most preferably in both the MD and TD. The films herein may also be characterized in certain embodiments as being biaxially oriented. The films can be made by any suitable technique known in the art, such as a tentered or blown process, LISIM™, and others. Further, the working conditions, temperature settings, lines speeds, etc., will vary depending on the type and the size of the equipment used. Nonetheless, described generally here is one method of making the films described throughout this specification. In a particular embodiment, the films are formed and biaxially oriented using the "tentered" method. In the tentered process, line speeds of greater than 100 m/min to 400 m/min or more, and outputs of greater than 2000 kg/hr to 4000 kg/hr or more are achievable. In the tenter process, sheets/films of the various materials are melt blended and coextruded, such as through a 3, 4, 5, 7-layer die head, into the desired film structure. Extruders ranging in diameters from 100 mm to 300 or 400 mm, and length to diameter ratios ranging from 10:1 to 50:1 can be used to melt blend the molten layer materials, the melt streams then metered to the die having a die gap(s) within the range of from 0.5 or 1 to an upper limit of 3 or 4 or 5 or 6 mm. The extruded film is then cooled using air, water, or both. Typically, a single, large diameter roll partially submerged in a water bath, or two large chill rolls set at 20°C or 30°C to 40°C or 50°C or 60°C or 70°C are suitable cooling means. As the film is extruded, an air knife and edge pinning are used to provide intimate contact between the melt and chill roll.

The core layer is a "polypropylene" layer, which means that it comprises, or consists essentially of a polypropylene homopolymer, copolymer, or mixtures of homopolymers, copolymers, or both, some of which may be recycled materials. The "polypropylene" that is preferably used in the core and other layers is a homopolymer or copolymer comprising from 60 wt% or 70 wt% or 80 wt% or 85 wt% or 90 wt% or 95 wt% or 98 wt% or 99 wt% to 100 wt% propylene-derived units; comprising within the range of from 0 wt% or 1 wt% or 5 wt% to 10 wt% or 15 wt% or 20 wt% or 30 wt% or 40 wt% C₂ and/or C₄ to C₁₀ α-olefin derived units; and can be made by any desirable process using any desirable catalyst as is known in the art, such as a Ziegler-Natta catalyst, a metallocene catalyst, or other single-site catalyst, using solution, slurry, high pressure, or gas phase processes. A "mini-random" polypropylene copolymer is a copolymer of propylene and a comonomer, preferably ethylene, the comonomer present within the range of from 0.01 or 0.10 to 2.0 wt% of the total polymer. Polypropylene copolymers are useful polymers in certain embodiments, especially copolymers of propylene with ethylene and/or butene, and comprise propylene-derived units within the range of from 70 wt% or 80 wt% to 95 wt% or 98 wt% by weight of the polypropylene. In any case, useful polypropylenes have a DSC melting point (ASTM D3418) of at least 125°C or 130°C or 140°C or 150°C or 160°C, or within a range of from 125°C or 130°C to 140°C or 150°C or 160°C. A "highly crystalline" polypropylene is preferred in certain embodiments of the inventive films, and is typically isotactic and comprises 100 wt% propylene-derived units (propylene homopolymer) and has a relatively high melting point of from greater than (greater than or equal to) 140°C or 145°C or 150°C or 155°C or 160°C or 165°C.

The term "crystalline," as used herein, characterizes those polymers which possess high degrees of inter- and intra-molecular order. Preferably, the polypropylene has a heat of fusion (H_{f}) greater than 60 J/g or 70 J/g or 80 J/g, as determined by DSC analysis. The heat of fusion is dependent on the composition of the polypropylene; the thermal energy for the highest order of polypropylene is estimated at 189 J/g, that is, 100% crystallinity is equal to a heat of fusion of 189 J/g. A polypropylene homopolymer will have a higher heat of fusion than a copolymer or blend of homopolymer and copolymer. Also, the polypropylenes useful in the inventive films may have a glass transition temperature (ISO 11357-1, T_{g}) preferably between - 20°C or -10°C or 0°C to 10°C or 20°C or 40°C or 50°C. Preferably, the polypropylenes have a Vicat softening temperature (ISO 306, or ASTM D 1525) of greater than 120°C or 110°C or 105°C or 100°C, or within a range of from 100°C or 105°C to 110°C or 120°C or 140°C or 150°C, or a particular range of from 110°C or 120°C to 150°C.

Preferably, the polypropylene has a melt flow rate ("MFR", 230°C, 2.16 kg, ASTM D1238) within the range of from 0.1 g/10 min or 0.5 g/10 min or 1 g/10 min to 4 g/10 min or 6 g/10 min or 8 g/10 min or 10 g/10 min or 12 g/10 min or 16 g/10 min or 20 g/10 min. Also, the polypropylene may have a molecular weight distribution (determined by GPC) of from 1.5 or 2.0 or 2.5 to 3.0 or 3.5 or 4.0 or 5.0 or 6.0 or 8.0 in certain embodiments. Suitable grades of polypropylene that are useful in the oriented films described herein include those made by ExxonMobil, LyondellBasell, Total, Borealis, Japan Polypropylene, Mitsui, and other sources.

The sealing layer may be made from one or more different materials including propylene homo and copolymers, ethylene-butene copolymers, propylene-ethylene-butene terpolymers, LDPE, LLDPE, HDPE, or functionalized or grafted versions of any of these. Any of the sealing layers or core layers may contain additives such as whitening agents (e.g., TiO₂) or cavitation agents (e.g. CaCO₃) and other additives well known in the art.

Any number of surfaces of the inventive coated films may be energy-treated. Such surface treating may be performed on the orientation apparatus on the metal-adhering layer, core, and/or the sealing or other skin layer (if present) of the biaxially oriented multi-layer film with treatment which may preferably include, for example, corona, plasma, flame, and/or chemical (e.g. oxidizing agent). The treatment step in the film preparation generally serves to impart a surface tension level of at least 35 dynes/cm, for example, to the core or other polymeric layer upon which the metal will adhere, and/or the metal surface upon which the printable coating will adhere. The surface tension of the treated layer, prior to metallization, will range from 35 or 38 to 42 or 45 dynes/cm. Surface tension of such treated skin layer surfaces may be measured in accordance with ASTM Standard D2578-84. Due to the inherent difficulty with obtaining repeatable results with measuring surface tension, it is anticipated that the stated range should be observed over a statistically meaningful number of samples and measurements to determine an average value that is at least 35 dynes/cm. Also, before metallizing, the dynamic contact angle may be measured in addition to or instead of the surface tension. The contact angle can be measured using a Cahn DCA 300 tensiometer.

Desirably, after energy-treatment the film will then be sent to a vacuum metallizing chamber which may also contain plasma or flame treating apparatus wherein the polymer layer to which the metal will be adhered may be subjected to treating conditions sufficient to create the requisite labile oxygen ratio at the skin layer surface. Then the treated polymer layer is metallized in the vacuum metallizing chamber to form the desired metallized biaxially oriented multi-layer film. The metallizing chamber can be of any desirable configuration to cause a thin film of metal to adhere to the film within the chamber. The process of metallizing entails at least the steps of moving a film having a metal-adhering skin layer with an outside surface and an inside surface at a rate relative to a source of metal vapor, the source being at a temperature to convert metal fed thereto to a vapor dispersed thereabove; then exposing the outside surface to the metal vapor obtained from the metal vapor source, where the rate of metal deposition is controlled by changing the exposure time of the outside surface to the metal vapor, changing the distance between the film and metal vapor source, changing the temperature of the metal vapor source, changing the rate of feed of metal to the metal vapor source, or a combination thereof. The exposure time of the film can be adjusted by, for example, changing the rate at which the film passes near and/or within the metal vapor generation point(s), such as the boats used to create molten aluminum and a vapor thereabove. The films are metalized desirably to an optical density of at least 1.6 or 1.7 OD, and to within a range of from 1.0 or 1.2 or 1.5 OD to 2.0 or 2.5 or 3.0 OD.

The metal layer of the flexible film is then coated with the printable coating with comprises, or consists essentially of, a primer layer, then a printable layer on top of that. The layers are applied to the metallized surface of the polymer film, and the sealable coating to the opposite surface, in any suitable manner such as by gravure coating, roll coating, dipping, spraying, etc. The excess aqueous solution can be removed by squeeze rolls, doctor knives, etc. The coating compositions will ordinarily be applied in such an amount that there will be deposited following drying, a smooth, evenly distributed layer in an amount as described above. In general, the thickness of the applied sealable and/or printable coating is such that it is sufficient to impart the desired sealability, coefficient of friction (COF), and hot slip characteristics to the desired substrate polymer film.

The printable coating comprises or consists essentially of at least one print layer. The at least one print layer comprises or consist essentially of an acrylic styrene copolymer such as those disclosed in US 2011-0159306. In this case, "consisting essentially of" means that the at least one print layer includes a composition of the acrylic styrene copolymer as well as other polymers and additives as the manufacturer of such copolymer includes. The relative level of acrylic and styrene in the copolymer may vary to any desirable average level that imparts the best scratch resistance and printability to the film. The "acrylic" monomer may include methylmethacrylate, and other C₂ to C₆ alkyl derivatives of acrylic. Furthermore, the "styrene" monomer may be any substituted version such as p-methylstyrene, p-halidstyrene, and other C₁ to C₆ alkyl and halide and hydroxide substituted versions thereof. Preferably, the copolymers useful in the printable coating are an aqueous dispersion having a total solids content within the range of from 15 or 20 or 25 wt% to 40 or 50 or 60 wt%. The pH of the aqueous copolymer dispersion is preferably greater than 7.0 or 7.5 or 8.0 or 8.5, and the Brookfield viscosity (25°C) is preferably within the range of from 50 or 80 or 100 mPa·s to 180 or 200 or 250 mPa·s. The glass transition temperature T_{g} of the acrylic styrene copolymer is preferably within the range of from -10 or 0 or 5°C to 20 or 25 or 30°C. The acrylic styrene copolymer is typically anionic and may be neutralized with ammonia. The acrylic styrene copolymer can be from any source, examples of which include NeoCryl™ BT-67 from DSM NeoResins. Preferably, no curatives are present in the printable coating.

Other additives to the print layer can include other acrylic-based polymers, especially an acrylic terpolymer, and solid particles of materials such as talc or polymethylmethacrylate (PMMA). Preferably, the print layer of the printable coating comprises within the range from 70 wt% or 75 wt% to 95 wt% or 100 wt% of the acrylic styrene copolymer; and from 0 wt% or 5 wt% to 25 wt% or 30 wt% acrylic terpolymer (MA-MAA-MMA). Even more preferably, the print layer of the printable coating also comprises within the range from 3 wt% or 4 wt% to 8 wt% or 10 wt% of a natural or synthetic wax (e.g., Carnauba, montan, Fischer-Tropsch, beeswax, candelilla, and/or paraffin waxes); and from 0.01 or 0.05 or 0.10 to 0.20 or 0.30 wt% of solid particles (e.g., talc or PMMA) having an average particle size of from 0.10 µm to 20 µm or 50 µm; wherein the remainder is the acrylic styrene copolymer, acrylic terpolymer (MA-MAA-MMA), or combinations thereof, in a combined amount up to 96.99 wt% and no less than 89.70 wt%.

The level of the wax and solid particles can be adjusted to adjust the properties of the printable coating. For instance, the level of wax and solid particles is preferably adjusted so that the kinetic and static COF (metal) is less than 0.70 or 0.60 or 0.50 or 0.40 or 0.30, or within the range of from 0.10 to 0.30 or 0.40 or 0.50 or 0.60 or 0.70.

The printable coating also comprises, or consists of, at least one, preferably one, primer layer. The at least one primer layer comprises, or consists of, ethylene acrylic acid-based copolymer such as a Paramelt™ EAA, which is obtained and used as an aqueous emulsion and applied to the treated metal surface of the flexible, oriented film. The primer may also comprise or consist essentially of ethylene alkyl ester copolymer, or may be a blend of EAA and ethylene alkyl ester copolymer.

The inventive coated films may also comprise a very low temperature sealable coating (VLTSC) on the sealing layer side of the film. The VLTSC may be applied to the sealing layer (sealable side) of the film with or without a primer, such coating. The VLTSC may be a copolymer or terpolymer as disclosed in US 6,013,353 comprising a base copolymer of about 10 to 35 wt% of an α,β-ethylenically unsaturated carboxylic acid, with about 65 to 90 wt% of ethylene, an alkyl acrylate or methacrylate, acrylonitrile, or mixtures thereof. The latter unsaturated acid may be, for example, acrylic acid, methacrylic acid, maleic acid, crotonic acid, itaconic acid, citraconic acid, or mixtures thereof. Preferably, the base copolymer is a copolymer of about 65 to 90 wt%, more preferably about 75 to 85 wt% of ethylene derived units (or C₂-C₆ versions thereof), and about 10 to 35 wt%, preferably about 15 to 25 wt% of acrylic acid derived units (an EAA copolymer) or methacrylic acid (an EMA copolymer) or ethylene methacrylic acid copolymer. The copolymer may units (an EAA copolymer) or methacrylic acid (an EMA copolymer) or ethylene methacrylic acid copolymer. The copolymer may have a number average molecular weight (Mn) of, for example, about 2,000 to 50,000 a.m.u., preferably about 4,000 to 10,000 a.m.u.

The base carboxylic acid copolymer in the low temperature sealable coating applied to the metallized surface is often obtained as a solution or fine dispersion of an ammonium salt of the copolymer in an ammoniacal water solution. When the copolymer is dried, ammonia is given off and the ionized and water sensitive carboxylate groups are converted to largely unionized and less water sensitive free carboxyl groups. In practicing this invention, however, there may be added to the solution or dispersion of the ethylene copolymer an amount of ions of at least one metal from Group I or II (New Notation) of the Periodic Table or the row of transitions metals starting at scandium, preferably, sodium, potassium, lithium, calcium or zinc ions, and most preferably sodium ions, for example, in the form of their hydroxides. The quantity of such metallic ions may be in the range sufficient to neutralize, for example, about 2 to 80%, preferably about 10 to 50% of the total carboxylate groups in the copolymer. The presence of such metallic ions has been found in many cases to result in an improvement in certain properties, for example, coefficient of friction (COF), hot tack, and blocking, without an unacceptable sacrifice of other properties, for example, low minimum seal temperatures (MST).

When the base copolymer in the sealable coating applied to the metallized surface is an EAA copolymer of 80 wt% of ethylene and 20 wt% of acrylic acid and the neutralizing metal ions are sodium ions added as sodium hydroxide, then the amount of sodium hydroxide added corresponding to the foregoing percentages of carboxylate groups neutralized, may be, for example, about 0.33 to 8.8 phr, preferably about 1.1 to 5.5 phr, where "phr" stands for parts by weight per hundred parts of the total resin, which is the same as the EAA copolymer when no other resin is present. For the purpose of determining the phr of various additives present in the coating, all the carboxylate groups of the ethylene copolymer are assumed to be in their free carboxyl (-COOH) form.

Food packaging, in particular, a sealed food bag can be formed from the inventive coated flexible film, wherein the metal-side of the film faces away from the food contained therein. The coated flexible film can be wound as any film would be, transported, and unwound in a VFFS or HFFS machine and fed there through to form bags to contain food, wherein the metal-side of the film faces away from the food contained therein. The films and the bags made from the films are desirable water and oxygen impermeable as evidenced by a low WVTR. Preferably, the films and bags made from the films have a WVTR less than 1.00 or 0.80 or 0.60 or 0.40 g/m²/day; or have a WVTR within the range of from 0.01 or 0.1 g/m²/day to 0.50 or 0.80 or 1.00 g/m²/day. The films also exhibit low blocking of less than 100 or 80 or 50 or 30 g/inch or both sides; and in particular, less than 20 or 10 g/inch on the sealing side of the film.

### EXAMPLES

Three different flexible oriented polypropylene films were tested; each film was metalized as is known in the art with a layer of aluminum. The films are each multi-layered with a core layer sandwiched between tie-layers and skin layers, at least one of which is sealable, in a STCSM or STCTSM configuration as defined above, wherein the "S" and "T" layers may be the same or different. The films are formed by co-extruding the various polymeric layers, oriented in the MD and TD direction, followed by metalizing; then coating the metal layer with the first primer layer, allowing this to dry, then coating the primer layer with the second layer of acrylic styrene copolymer, then allowing this to dry. This face was then tested for printing, and the films tested for the blocking resistance and coefficient of friction (COF).

More particularly, in sample Film A, the core layer comprises about 80 wt% of a "mini" random polypropylene copolymer having no more than about 2 wt% ethylene derived units, and about 20 wt% of reclaimed polypropylene (from unused or recycled films that are at least 90 wt% (overall) in polypropylene); a sealable skin layer and metal-facing skin layer of an ethylene-propylene copolymer; and one tie-layer between the sealable skin and core of the mini-random polypropylene copolymer; wherein the core layer is about 20-25 µm, and the total film thickness is about 30 µm.

Sample Film B has a core layer similar to Film A as well as cavitation agent and white pigment; a sealable skin of C₂/C₄ copolymer; a sealable-side tie-layer of polypropylene homopolymer and white pigment; a metal-facing skin layer of C₃/C₄ copolymer with silica particles; a metal-facing tie-layer of polypropylene homopolymer and white pigment; and the metal layer; wherein the core layer is about 18-22 µm, and the total film thickness is about 30 µm.

Sample Film C is similar to Film B, except the core is from 22-30 µm and has half the cavitating agent, and the total film thickness is about 35 µm; the metallized film having an Optical Density as measured in Table 2.

The films were then treated by oxidative treatment, specifically, corona, on the metal facing side followed by coating (gravure rolls) with the primer layer, which in each case was an ethylene acrylic acid emulsion (Paramelt™) which has 20% acrylic acid content with the following features: Boiling point: 100°C, Vapor Pressure at 20°C of 23 hPa, pH at 20°C of 8, a dynamic viscosity at 23°C of 150 mPa·s, and a solids content of 33%, which was dried by heating with air, followed by coating with the print coating, which was then dried by heating with air. The components for each sample film are in Table 1, where "SAC" is the styrene acrylic acid copolymer NeoCryl™ BT-67 from DSM Neoresins and is a metal crosslinked acrylic styrene copolymer with a T_{g} of about 17°C; the "AT" is acrylic terpolymer, talc is simply finely divided talc; PMMA is particulate polymethyl methacrylate (Epostar™) having an average particle size of 4µm from Nippon Sokubai; and "wax" is Michem™ Lube (ML) 215.E which is a carnauba wax emulsion with an average particle size of 120 nm; and Uradil ZW 7635 is a water-based polyester coating.

Additionally, a "very low temperature sealing coat" or "VLTSC" may be placed on the side opposite of the SAC-coated side, or the side on the "sealing layer" side of the film. The preferable VLTSC is based on ethylene acrylic acid. In the Examples, ethylene/acrylic acid copolymer with about 20 to 20.5 wt% acrylic acid was used, having a DSC melting peak of 75/77°C. The VLTSC is coated at from 0.20 or 0.30 or 0.40 g/m² to 1.00 or 1.20 g/m². This layer facilities that sealing of the film to itself or another film to form a bag or other packaging for food. In any case, the coated metallized films can then be slitted and rolled for transport to user facilities. Bags can be formed on vertical or horizontal "form, fill and seal" (VFFS or HFFS) equipment as is known in the art using the inventive films, where the sealing side of the film is heat-sealed to another portion of the same film to form the enclosure for food.

**Table 1. Coating Compositions, each sample having 0.30 g/m³ EAA Primer layer**

| **Sample** | **Print Coating, 1.20 g/m³** |
|---|---|
| 120 | SAC (NeoCryl™ BT-67) |
| 121 | SAC |
| 122 | SAC |
| 123 | SAC |
| 124 | SAC + wax + talc |
| 125 | SAC + wax + talc |
| 126 | SAC + wax + talc |
| 127 | SAC + wax + talc |
| 129 | polyester (Uradil™ ZW 7635) |
| 130 | SAC + wax + talc |
| 131 | SAC + wax + talc |
| 132 | SAC + wax + talc |
| 133 | polyester |
| 140 | SAC + PMMA + wax |
| 141 | SAC + PMMA + wax |
| 142 | SAC + PMMA + wax |
| 143 | SAC + PMMA + wax |
| 144 | SAC + AT + wax |
| 145 | SAC + AT + wax + PMMA |
| 146 | SAC + AT + wax + PMMA |

So called "fit for use" performance was measured defined protocols for: Ink Adhesion (e.g.: nitrocellulose based-ink): 3 (very good) to 1 (poor); Water Vapor Transmission (g/m²/day): Always < 1 g/m²/day; Corrosion-resistance is confirmed either in tropical conditions (38°C/90% Relative Humidity) and is stable with time (> 24 H00); Water pick-up after packaging could be lower versus a laminate; Blocking (g/inch) - Test conditions: 1H00/60°C/53 kg/m²):
1) Coated Metal on Coated Metal 2) Coated Metal on Very Low Temperature Sealing Coating;
   Coefficient Of Friction (Static/Kinetic): 1) Coated Metal on Metal plate
2) Coated Metal on Coated Metal.

### EQUIPMENT USED FOR TESTS

1) **Coefficient Of Friction:** Slip-peel tester [Thwing-Albert Model# 225-1] with a 200 g (Dimension: 10 x 63 mm) covered with flexible foam with smooth surface and Density=0.25 g/cm³.
2) **Blocking:** - Laboratory Press (e.g. Carver - Model C) equipped with: 2 hot plates with a Temperature regulation (60C ± 1°C); pressure gauge up to 11 Tons; 2 steel plates (Dimension: 50 to 80 cm²), each fixed in the center of the hot plate; Alarm timer; Template approximately 25 mm wider and longer than the steel plate; and Dynamometer: e.g.: Thwing Albert Model 225-1.
3) **WVTR:** The water vapor transmission measurements were performed on a Mocon Permatran-W™ 3/33. The results of the testing are in Table 2.

The inventors find that sample coated flexible films 124, 130, 131, 140-143, and especially 145 and 146 are preferred embodiments. These films demonstrate excellent WVTRs, blocking and low coefficient of friction. Also, the printing side of the films are highly printable and have excellent scratch resistance.

Thus, having described the various features of the inventive coated films, disclosed herein in numbered embodiments is:
1. A coated flexible oriented film having three or more layers comprising:
   a. a core layer of polypropylene;
   b. a sealing layer;
   c. a metal layer opposite the sealing layer, thereby sandwiching the core layer;
   and
   d. a printable coating adhered to the metal layer, thereby sandwiching the metal layer between the core layer and printable coating;
   wherein the printable coating comprises at least one primer layer of an ethylene acrylic acid-based copolymer, an ethylene alkyl ester-based copolymer, or a blend thereof, and at least one print layer comprising an acrylic styrene copolymer.
2. The coated flexible film of numbered embodiment 1, wherein a coating weight of the ethylene acrylic acid-based primer is within a range of from 0.05 g/m² or 0.10 g/m² to 0.35 g/m² or 0.40 g/m² or 0.50 g/m² or 0.80 g/m² or 1.00 g/m².
3. The coated flexible film of numbered embodiments 1 or 2, wherein the coating weight of the acrylic styrene copolymer is within the range of from 0.50 g/m² or 1.00 g/m² to 1.25 g/m² or 1.30 g/m² or 1.40 g/m² or 1.50 g/m² or 2.00 g/m².
4. The coated flexible film of any one of the previous numbered embodiments, wherein the metal layer is energy-treated on a side facing the printable coating.
5. The coated flexible film of any one of the previous numbered embodiments, wherein the at least one print layer of the printable coating comprises within the range from 70 wt% or 75 wt% to 95 wt% or 100 wt% of the acrylic styrene copolymer; and from 0 wt% or 5 wt% to 25 wt% or 30 wt% acrylic terpolymer (MA-MAA-MMA).
6. The coated flexible film of numbered embodiment 5, wherein the at least one print layer of the printable coating also comprises within the range from 3 wt% or 4 wt% to 8 wt% or 10 wt% wax; and from 0.01 or 0.05 or 0.10 to 0.20 or 0.30 wt% of solid particles having an average particle size of from 0.10 µm to 20 µm or 50 µm; wherein a remainder is the acrylic styrene copolymer and acrylic terpolymer (MA-MAA-MMA) in a combined amount up to 96.99 wt% and no less than 89.70 wt%.
7. The coated flexible film of numbered embodiment 6, wherein a level of wax and solid particles is adjusted so that a kinetic and static COF (metal) is less than 0.70 or 0.60 or 0.50 or 0.40 or 0.30.
8. The coated flexible film of any one of the previous numbered embodiments, wherein a glass transition temperature Tg of the acrylic styrene copolymer is within a range of from -10 through 30°C.
9. The coated flexible film of any one of the previous numbered embodiments, further comprising a very low temperature sealing coating on the sealing layer, wherein the sealing coating comprises (or consists essentially of) ethylene acrylic acid copolymer having from 10 to 35 wt% acrylic acid derived units.
10. The coated flexible film of any one of the previous numbered embodiments, wherein the printable coating is water-based.
11. The coated flexible film of any one of the previous numbered embodiments, wherein the at least one primer layer is water-based.
12. A food bag formed from the coated flexible film of any one of the previous numbered embodiments, wherein a metal side of the coated flexible film faces away from food contained therein.
13. The coated flexible film of claim of numbered embodiment 1, wherein one or more additives are present in the sealing layer, the core layer, or combinations thereof.
14. The coated flexible film of numbered embodiment 1, wherein curatives are absent from the printable coating.
15. The coated flexible film of numbered embodiment 1, wherein the coated flexible film comprises one or more additional tie layers, skin layers, or combinations thereof.
16. A method comprising: receiving the coated flexible film of numbered embodiment 1 and forming a package or bag from the coated flexible film.

**Table 2. Experimental Property Measurements of Example Films**

| **Sample** | **Ink Adhesion & Ink scratch resistance** | **WVTR (g/m²/day) & Optical Density** | **Blocking Out/Out & Out/VLTSC (g/inch)** | **COF Metal Plate (Static/Kinetic)** | **COF Out/Out (Static/Kinetic)** |
|---|---|---|---|---|---|
| 120 | - | 0.53 (OD = 1.8) | 227 & 4 | - | Kin.: 0.58 |
| 121 | - | - | 10 & 4 | - | Kin.: 0.83 |
| 122 | - | - | 159 & 5 | - | Kin.: 0.57 |
| 123 | - | - | 15 & 5 | - | - |
| 124 | 3 & 3 | 0.52 (OD = 1.8) | 15 & 5 | 0.34 & 0.47 | 0.82 & 0.60/0.55 |
| 125 | - | - | 26 & 5 | - | Kin.: 0.60 |
| 126 | - | - | 27 & 5 | - | - |
| 127 | - | - | 21 & 4 | - | Kin.: 0.50 |
| 129 | 1 & 1 | 0.79 (OD = 1.8) | 5 & 4 | - | Kin.: 0.32 |
| 130 | 3 & 3 | - | - | 0.30 & 0.46 | 0.91 & 0.68 |
| 131 | 3 & 3 | - | - | 0.30 & 0.33 | 0.85 & 0.71 |
| 132 | 2 & 3 | - | - | 0.42 & 0.37 | 0.85 & 0.71 |
| 133 | 1 & 2 | - | - | 0.37 & 0.36 | 0.97 & 0.94 |
| 140 | 3 & 3 | 0.34 (OD = 1.96) | 19 & 3 | 0.21 & 0.21 | 0.77 & 0.47 |
| 141 | 3 & 3 | 0.34 (OD = 1.99) | 23 & 5 | 0.23 & 0.21 | 0.78 & 0.45 |
| 142 | 3 & 3 | 0.39 (OD = 2.00) | 9 & 5 | 0.28 & 0.26 | 0.66 & 0.47 |
| 143 | 3 & 3 | 0.50 (OD = 2.07) | 41 & 3 | 0.20 & 0.19 | 0.66 & 0.39 |
| 144 | 1 & 1 | - | 16 & 5 | 0.21 & 0.19 | 0.47 & 0.32 |
| 145 | 3 & 3 | 0.40 (OD = 2.0) | 15 & 4 | 0.21 & 0.19 | 0.53 & 0.32 |
| 146 | 3(2) & 3(2) | 0.37 (OD = 2.0) | 13 & 4 | 0.22 & 0.20 | 0.50 & 0.35 |

## Claims

1. A coated flexible film having three or more layers comprising:
a. a core layer of oriented polypropylene;
b. a sealing layer;
c. a metal layer opposite the sealing layer, thereby sandwiching the core layer; and
d. a printable coating adhered to the metal layer, thereby sandwiching the metal layer between the core layer and the printable coating;
wherein the printable coating comprises at least one primer layer of an ethylene acrylic acid-based copolymer, ethylene alkyl ester-based copolymer, or blend thereof, and at least one print layer comprising an acrylic styrene copolymer.

2. The coated flexible film of claim 1, wherein a coating weight of the ethylene acrylic acid-based primer is within a range of from 0.05 g/m² or 0.10 g/m² to 0.35 g/m² or 0.40 g/m² or 0.50 g/m² or 0.80 g/m² or 1.00 g/m².

3. The coated flexible film of claim 1, wherein a coating weight of the acrylic styrene copolymer is within a range of from 0.50 g/m² or 1.00 g/m² to 1.25 g/m² or 1.30 g/m² or 1.40 g/m² or 1.50 g/m² or 2.00 g/m².

4. The coated flexible film of claim 1, wherein the metal layer is energy-treated on a side facing the printable coating.

5. The coated flexible film of claim 1, wherein the at least one print layer of the printable coating comprises within a range from 70 wt% or 75 wt% to 95 wt% or 100 wt% of the acrylic styrene copolymer; and from 0 wt% or 5 wt% to 25 wt% or 30 wt% acrylic terpolymer (MA-MAA-MMA).

6. The coated flexible film of claim 5, wherein the at least one print layer of the printable coating also comprises within a range from 3 wt% or 4 wt% to 8 wt% or 10 wt% wax; and from 0.01 or 0.05 or 0.10 to 0.20 or 0.30 wt% of solid particles having an average particle size of from 0.10 µm to 20 µm or 50 µm; wherein a remainder is the acrylic styrene copolymer and acrylic terpolymer (MA-MAA-MMA) in a combined amount up to 96.99 wt% and no less than 89.70 wt%.

7. The coated flexible film of claim 6, wherein a level of wax and solid particles is adjusted so that a kinetic and static COF (metal) is less than 0.70 or 0.60 or 0.50 or 0.40 or 0.30.

8. The coated flexible film of claim 1, wherein a glass transition temperature T_{g} of the acrylic styrene copolymer is within a range of from -10°C through 30°C.

9. The coated flexible film of claim 1, further comprising a very low temperature sealing coating on the sealing layer.

10. The coated fixable film of claim 1, wherein the printable coating is water-based.

11. The coated flexible film of claim 1, wherein the at least one primer layer is water-based.

12. A food bag formed from the coated flexible film of claim 1, wherein a metal side of the coated flexible film faces away from food contained therein.

13. The coated flexible film of claim 1, wherein one or more additives are present in the sealing layer, the core layer, or combinations thereof.

14. The coated flexible film of claim 1, wherein curatives are absent from the printable coating.

15. The coated flexible film of claim 1, wherein the coated flexible film comprises one or more additional tie layers, skin layers, or combinations thereof.

16. A method comprising: receiving the coated flexible film of claim 1 and forming a food package or bag from the coated flexible film, wherein a metal side of the coaled flexible film faces away from food contained therein.

## Patentansprüche

1. Beschichtete flexible Folie mit drei oder mehr Schichten, umfassend:
a. eine Kernschicht aus orientiertem Polypropylen;
b. eine Versiegelungsschicht;
c. eine Metallschicht, die sich gegenüber der Versiegelungsschicht befindet, wodurch die Kernschicht sandwichartig umgeben ist; und
d. eine aufdruckbare Beschichtung, die auf der Metallschicht haftet, wodurch die Metallschicht zwischen der Kernschicht und der aufdruckbaren Beschichtung sandwichartig angeordnet ist;
wobei die aufdruckbare Beschichtung mindestens eine Grundierungsschicht aus einem Copolymer auf Ethylen-Acrylsäure-Basis, einem Copolymer auf Ethylen-Alkylester-Basis oder einer Mischung davon und mindestens eine Druckschicht, die ein Acryl-Styrol-Copolymer umfasst, umfasst.

2. Beschichtete flexible Folie nach Anspruch 1, wobei ein Auftragsgewicht der Grundierung auf Ethylen-Acrylsäure-Basis in einem Bereich von 0,05 g/m² oder 0,10 g/m² bis 0,35 g/m² oder 0,40 g/m² oder 0,50 g/m² oder 0,80 g/m² oder 1,00 g/m² liegt.

3. Beschichtete flexible Folie nach Anspruch 1, wobei ein Auftragsgewicht des Acryl-Styrol-Copolymers in einem Bereich von 0,50 g/m² oder 1,00 g/m² bis 1,25 g/m² oder 1,30 g/m² oder 1,40 g/m² oder 1,50 g/m² oder 2,00 g/m² liegt.

4. Beschichtete flexible Folie nach Anspruch 1, wobei die Metallschicht auf einer der aufdruckbaren Beschichtung zugewandten Seite energiebehandelt ist.

5. Beschichtete flexible Folie nach Anspruch 1, wobei die mindestens eine Druckschicht der aufdruckbaren Beschichtung in einem Bereich von 70 Gew.-% oder 75 Gew.-% bis 95 Gew.-% oder 100 Gew.-% des Acryl-Styrol-Copolymers und 0 Gew.-% oder 5 Gew.-% bis 25 Gew.-% oder 30 Gew.-% Acryl-Terpolymer (MA-MAA-MMA) umfasst.

6. Beschichtete flexible Folie nach Anspruch 5, wobei die mindestens eine Druckschicht der aufdruckbaren Beschichtung auch in einem Bereich von 3 Gew.-% oder 4 Gew.-% bis 8 Gew.-% oder 10 Gew.-% Wachs und 0,01 oder 0,05 oder 0,10 bis 0,20 oder 0,30 Gew.-% feste Teilchen mit einer durchschnittlichen Teilchengröße von 0,10 µm bis 20 µm oder 50 µm umfasst; wobei es sich bei einem Rest um das Acryl-Styrol-Copolymer und Acryl-Terpolymer (MA-MAA-MMA) in einer kombinierten Menge von bis zu 96,99 Gew.-% und nicht weniger als 89,70 Gew.-% handelt.

7. Beschichtete flexible Folie nach Anspruch 6, wobei ein Gehalt an Wachs und festen Teilchen so eingestellt ist, dass ein kinetischer und statischer Reibungskoeffizient (Metall) weniger als 0,70 oder 0,60 oder 0,50 oder 0,40 oder 0,30 beträgt.

8. Beschichtete flexible Folie nach Anspruch 1, wobei eine Glasübergangstemperatur T_{g} des Acryl-Styrol-Copolymers in einem Bereich von -10°C bis 30°C liegt.

9. Beschichtete flexible Folie nach Anspruch 1, ferner umfassend eine bei sehr niedriger Temperatur siegelnde Beschichtung auf der Versiegelungsschicht.

10. Beschichtete flexible Folie nach Anspruch 1, wobei die aufdruckbare Beschichtung auf Wasser basiert.

11. Beschichtete flexible Folie nach Anspruch 1, wobei die mindestens eine Grundierungsschicht auf Wasser basiert.

12. Lebensmittelbeutel, gebildet aus der beschichteten flexiblen Folie nach Anspruch 1, wobei eine Metallseite der beschichteten flexiblen Folie von dem darin enthaltenen Lebensmittel abgewandt ist.

13. Beschichtete flexible Folie nach Anspruch 1, wobei in der Versiegelungsschicht, der Kernschicht oder Kombinationen davon ein oder mehrere Additive vorliegen.

14. Beschichtete flexible Folie nach Anspruch 1, wobei in der aufdruckbaren Beschichtung keine Härtungsmittel vorliegen.

15. Beschichtete flexible Folie nach Anspruch 1, wobei die beschichtete flexible Folie eine oder mehrere zusätzliche Verbindungsschichten, Deckschichten oder Kombinationen davon umfasst.

16. Verfahren, bei dem man die beschichtete flexible Folie nach Anspruch 1 empfängt und aus der beschichteten flexiblen Folie eine Lebensmittelvespackung oder einen Lebensmittelbeutel bildet, wobei eine Metallseite der beschichteten flexiblen Folie von dem darin enthaltenen Lebensmittel abgewandt ist.

## Revendications

1. Film flexible revêtu comportant trois couches ou plus comprenant :
a. une couche centrale de polypropylène orienté ;
b. une couche d'étanchéité ;
c. une couche métallique opposée à la couche d'étanchéité, de manière à prendre en sandwich la couche centrale ; et
d. un revêtement imprimable adhérant à la couche métallique, de manière à prendre en sandwich la couche métallique entre la couche centrale et le revêtement imprimable ;
dans lequel le revêtement imprimable comprend au moins une couche primaire d'un copolymère à base d'éthylène-acide acrylique, un copolymère à base d'éthylène-ester alkylique, ou un mélange de ceux-ci, et au moins une couche d'impression comprenant un copolymère acrylique-styrène.

2. Film flexible revêtu de la revendication 1, dans lequel un poids de revêtement de la couche primaire à base d'éthylène-acide acrylique est dans une plage de de 0,05 g/m² ou 0,10 g/m² à 0,35 g/m² ou 0,40 g/m² ou 0,50 g/m² ou 0,80 g/m² ou 1,00 g/m².

3. Film flexible revêtu de la revendication 1, dans lequel un poids de revêtement du copolymère acrylique-styrène est dans une plage de 0,50 g/m² ou 1,00 g/m² à 1,25 g/m² ou 1,30 g/m² ou 1,40 g/m² ou 1,50 g/m² ou 2,00 g/m².

4. Film flexible revêtu de la revendication 1, dans lequel la couche métallique est traitée par énergie sur un côté faisant face au revêtement imprimable.

5. Film flexible revêtu de la revendication 1, dans lequel l'au moins une couche d'impression du revêtement imprimable comprend dans la plage de 70 % en poids ou 75 % en poids à 95 % en poids ou 100 % en poids du copolymère acrylique-styrène ; et de 0 % en poids ou 5 % en poids à 25 % en poids ou 30 % en poids de terpolymère acrylique (MA-MAA-MMA).

6. Film flexible revêtu de la revendication 5, dans lequel l'au moins une couche d'impression du revêtement imprimable comprend en outre dans une plage de 3 % en poids ou 4 % en poids à 8 % en poids ou 10 % en poids de cire ; et de 0,01 ou 0,05 ou 0,10 à 0,20 ou 0,30 % en poids de particules solides ayant une taille de particule moyenne de 0,10 µm à 20 µm ou 50 µm ; dans lequel un restant est le copolymère acrylique-styrène et un terpolymère acrylique (MA-MAA-MMA) en une quantité combinée allant jusqu'à 96,99 % en poids et pas moins de 89,70 % en poids.

7. Film flexible revêtu de la revendication 6, dans lequel un taux de cire et de particules solides est ajusté de sorte qu'un COF cinétique et statique (métal) soit inférieur à 0,70 ou 0,60 ou 0,50 ou 0,40 ou 0,30.

8. Film flexible revêtu de la revendication 1, dans lequel la température de transition vitreuse T_{g} du copolymère acrylique-styrène est dans une plage de -10 °C à 30 °C.

9. Film flexible revêtu de la revendication 1, comprenant en outre un revêtement d'étanchéité à très basse température sur la couche d'étanchéité.

10. Film flexible revêtu de la revendication 1, dans lequel le revêtement imprimable est à base d'eau.

11. Film flexible revêtu de la revendication 1, dans lequel l'au moins une couche primaire est à base d'eau.

12. Sac alimentaire formé du film flexible revêtu de la revendication 1, dans lequel un côté métallique du film flexible revêtu est orienté sur le côté opposé à l'aliment contenu dans celui-ci.

13. Film flexible revêtu de la revendication 1, dans lequel un ou plusieurs additifs sont présents dans la couche d'étanchéité, la couche centrale, ou des combinaisons de celles-ci.

14. Film flexible revêtu de la revendication 1, dans lequel des durcisseurs sont absents du revêtement imprimable.

15. Film flexible revêtu de la revendication 1, le film flexible revêtu comprenant une ou plusieurs couches de liaison ou couches de peau additionnelles, ou des combinaisons de celles-ci.

16. Procédé comprenant : la réception du film flexible revêtu de la revendication 1 et la formation d'un emballage ou sac alimentaire à partir du film flexible revêtu, dans lequel un côté métallique du film flexible revêtu est orienté sur le côté opposé à l'aliment contenu dans celui-ci.
